# EUROPÄISCHE PATENTSCHRIFT

(11) **EP 2 386 770 B1**
(45) Veröffentlichungstag und Bekanntmachung des Hinweises auf die Patenterteilung: **23.09.2015**
(21) Anmeldenummer: 11162990.3
(22) Anmeldetag: 19.04.2011
(51) Int. Cl.: F16B 25/00

(54) **Gewindeschneidende Betonschraube**
Thread cutting concrete screw
Vis à béton autotaraudeuse

(30) Priorität: 10.05.2010 DE 102010028824
(43) Veröffentlichungstag der Anmeldung: 16.11.2011
(73) Patentinhaber: HILTI Aktiengesellschaft, 9494 Schaan (LI)
(72) Erfinder: Neumaier, Tobias, 6820, Rankweil (AT); Gstach, Peter, 9494, Schaan (LI); Beckert, Michael, 9444, Diepoldsau (CH)
(74) Vertreter: Hilti Aktiengesellschaft Corporate Intellectual Property

(56) Entgegenhaltungen:
- JP-A- 2008 256 093
- US-A- 3 780 389
- US-A- 5 755 542
- US-A1- 2008 124 188

## Beschreibung

Die vorliegende Erfindung betrifft eine gewindeschneidende Schraube gemäß dem Oberbegriff des Anspruchs 1.

Gewindeschneidende Betonschrauben werden in Bohrlöchern eines Baustoffes, insbesondere Beton, ohne Verwendung eines Dübels eingeschraubt. Dabei ist der Durchmesser des Bohrloches größer als ein Kerndurchmesser der Schraube und kleiner als ein Außendurchmesser der Schraube mit dem Gewinde. Dadurch arbeitet sich beim Einschrauben der Schraube, insbesondere mittels eines Schlagschraubers, die Schraube dahingehend in den Baustoff ein, dass das Gewinde in den Baustoff ein entsprechendes Gegengewinde einarbeitet oder einschneidet. Die Schraube schneidet somit das für den erforderlichen Formschluss zwischen dem Gewinde und dem Baustoff erforderliche Gewinde bzw. Gegengewinde selbst ein.

Aus der EP 1 795 768 B1 ist eine gattungsgemäße gewindeschneidende Schraube, insbesondere Betonschraube bekannt, mit einem Gewinde und einem Gewindekern, wobei das Gewinde Schneiden bildende Unterbrechungen aufweist, der Gewindekern in einem vorderen Bereich der Schraube konisch geformt ist und die Schraube eine Nut aufweist, die in einer Längsrichtung der Schraube verläuft, die das Gewinde durchsetzt und die Unterbrechungen bildet und die tiefer als das Gewinde hoch ist, so dass sie in den Gewindekern reicht, wobei die Tiefe der Nut am vorderen Ende der Schraube zum Ende des konischen Bereichs des Gewindekerns abnimmt.

Weitere Schrauben, die stirnseitig nutenförmige Ausnehmungen aufweisen, sind aus der US 5,755,542 A, der US 2008/0124188 A1, der US 3,780,389 A und der JP 2008-256093 A bekannt.

Die Aufgabe der vorliegenden Erfindung besteht darin, eine gewindeschneidende Schraube zur Verfügung zu stellen, bei der das erforderliche Eindrehmoment beim Einschrauben der Schraube in ein Bohrloch gering ist und die Schraube in der Herstellung preiswert ist.

Diese Aufgabe wird gelöst mit einer gewindeschneidenden Schraube, insbesondere Betonschraube, umfassend einen Schraubenkopf, einen Schraubenschaft und ein wenigstens teilweise an dem Schraubenschaft ausgebildetes Gewinde, wobei an einem vorderen Bereich der Schraube beginnend mit einem Schraubenende an dem Schraubenschaft vier Längsnuten ausgebildet sind, welche jeweils von zwei im Wesentlichen radial bezüglich einer Längsachse der Schraube verlaufenden Längsseiten an dem Schraubenschaft begrenzt sind, wobei die Tiefe der vier Längsnuten in Richtung von dem Schraubenende zu den Schraubenkopf stetig abnimmt, dadurch gekennzeichnet, dass eine Längsseite je Längsnut in einem Winkel α zwischen 1° und 20° zu einer Geraden parallel zu der Längsachse der Schraube ausgerichtet ist, dass die erste und die zweite Längsnut eine Form aufweisen, die dadurch erhalten werden kann, dass ein erstes, um eine erste Rotationsachse rotierendes scheibenförmiges Werkzeug mit einem Bearbeitungsring in die Schraube eingearbeitet wird, und dass die dritte und die vierte Längsnut eine Form aufweisen, die dadurch erhalten werden kann, dass ein zweites, um eine zweite Rotationsachse rotierendes scheibenförmiges Werkzeug mit einem Bearbeitungsring in die Schraube eingearbeitet wird, wobei die beiden Bearbeitungsringe mit einem Abstand zueinander angeordnet werden und die Schraube zwischen den beiden Bearbeitungsringen so platziert wird, dass durch eine Relativbewegung zwischen Schraube und den Bearbeitungsringen jeweils zwei gegenüberliegende Paare an Längsnuten eingearbeitet werden. Erfindungsgemäss ist also unter anderem vorgesehen: eine gewindeschneidenden Schraube umfassend einen Schraubenkopf, einen Schraubenschaft und ein wenigstens teilweise an dem Schraubenschaft ausgebildetes Gewinde, wobei an einem vorderen Bereich der Schraube beginnend mit einem Schraubenende an dem Schraubenschaft wenigstens eine Längsnut ausgebildet ist und die wenigstens eine Längsnut von zwei im Wesentlichen, d. h. mit einer Abweichung von weniger als 30°, 20° oder 10° zu einem Radius, radial bezüglich einer Längsachse der Schraube verlaufenden Längsseiten an dem Schraubenschaft begrenzt sind, wobei wenigstens eine Längsseite je Längsnut in einem Winkel α zwischen 1° und 20° zu einer Geraden parallel zu der Längsachse der Schraube ausgerichtet ist und/oder die wenigstens eine Längsnut schraubenlinienförmig an dem Schraubenschaft ausgebildet ist. Der Radius bezüglich der Längsachse steht senkrecht auf der Längsachse. Zweckmäßig ist eine Schraubenlinie der wenigstens einen Längsnut in der gleichen Drehrichtung ausgerichtet wie eine Schraubenlinie des Gewindes. Der Steigungswinkel der Schraubenlinie der wenigstens einen Längsnut liegt zwischen 1 ° und 20°, vorzugsweise zwischen 2° und 10°, insbesondere zwischen 3° und 8°.

Beim Einschrauben der gewindeschneidenden Schraube in ein Bohrloch tritt im Bereich des Schraubenendes Gesteinsmehl des Baustoffes auf. Das Gesteinsmehl kann dabei daher resultieren, dass dieses entweder nach dem Einbringen der Bohrung in der Bohrung nicht vollständig entfernt wurde und/oder beim Einschrauben der gewindeschneidenden Schraube in das Bohrloch im Bereich des Schraubenendes das Gesteinsmehl entsteht. Die Längsnuten bilden dabei Taschen zur Aufnahme des Gesteinmehles zwischen dem Schraubenschaft und der Wand des Bohrloches. Aufgrund der Ausrichtung wenigstens einer Längsseite der Längsnut in dem Winkel α zu der Geraden wird Gesteinsmehl in den Längsnuten vom Bereich an dem Schraubenende in einen hinteren Bereich in den Längsnuten in Richtung zu dem Schraubenkopf gefördert. Damit kann am vorderen Endbereich der wenigstens einen Längsnut an dem Schraubenende wieder zusätzliches Gesteinsmehl problemlos aufgenommen werden. Dadurch ist weniger Gesteinsmehl oder kein Gesteinsmehl in dem Zwischenraum zwischen dem Schraubenschaft und der Wandung des Bohrloches vorhanden, so dass dadurch die Reibung zwischen der Schraube und der Wandung des Bohrloches verringert werden kann und damit das erforderliche Eindrehmoment wesentlich reduziert ist.

Insbesondere liegt der Winkel α zwischen 2° und 10°, insbesondere zwischen 3° und 8°.

Erfindungsgemäss weist die Schraube mehrere, insbesondere äquidistant, über den Umfang verteilte Längsnuten auf. Erfindungsgemäss ist die Anordnung von vier Längsnuten vorgesehen.

Vorzugsweise weisen die Längsnuten in axialer Richtung eine unterschiedliche Ausdehnung auf.

In einer Variante ist an der wenigstens einen Längsnut wenigstens ein Gewinde unterbrochen.

Zweckmäßig ist die wenigstens eine Längsnut im Querschnitt L- oder V-förmig ausgebildet. Erfindungsgemäss nimmt die Tiefe der wenigstens einen Längsnut in Richtung von dem Schraubenende zu dem Schraubenkopf stetig ab.

Bevorzugt schleißt mindestens eine Längsseite mindestens einer Längsnut einen rechten Winkel mit dem Schraubenschaft ein, was gleichbedeutend ist, dass diese zumindest eine Längsseite in ihrer radialen Ausrichtung und Verlängerung durch die Schraubenmittelachse verläuft. Hierdurch kann der Schneid- und Transporteffekt der Längsnut weiter optimiert werden.

In einer weiteren Ausführungsform besteht die Schraube wenigstens teilweise aus Metall, z. B. Stahl, oder, vorzugsweise faserverstärktem Kunststoff, z. B. GFK.

Es kann ein Verfahren zur Herstellung einer gewindeschneidenden Schraube, insbesondere einer in dieser Schutzrechtsanmeldung beschriebenen Schraube, vorgesehen sein, mit den Schritten: zur Verfügung stellen einer gewindeschneidenden Schraube, insbesondere Betonschraube, umfassend einen Schraubenkopf, einen Schraubenschaft und ein wenigstens teilweise an dem Schraubenschaft ausgebildetes Gewinde, Einarbeiten wenigstens einer Längsnut an einen vorderen Bereich der Schraube, wobei wenigstens eine Längsnut in einem Winkel α zwischen 1° und 20° zu einer Geraden parallel zu der Längsachse der Schraube in den Schraubenschaft eingearbeitet wird und/oder wenigstens eine Längsnut schraubenlinienförmig in den Schraubenschaft eingearbeitet wird.

In einer weiteren Ausgestaltung liegt der Winkel α zwischen 2° und 10°, insbesondere zwischen 3° und 8°.

Vorteilhafterweise wird die wenigstens eine Längsnut spanabhebend mit einem um eine Rotationsachse rotierenden scheibenförmigen Werkzeug eingearbeitet, wobei die Rotationsachse während des Einarbeitens in dem Winkel α zu einer Geraden ausgerichtet, welche senkrecht zu einer Längsgeraden parallel zu der Längsachse ausgerichtet ist.

Bevorzugt ist es, dass die Scheiben der rotierenden Werkzeuge unterschiedliche Radien aufweisen und/oder dass alle Längsnuten gleichzeitig in einem Arbeitsschritt erstellt werden.

Im Nachfolgenden wird ein Ausführungsbeispiel der Erfindung unter Bezugnahme auf die beigefügten Zeichnungen näher beschrieben. Es zeigen:
- Fig. 1: eine perspektivische Ansicht einer gewindeschneidenden Schraube,
- Fig. 2: eine Teilseitenansicht der Schraube gemäß Fig. 1,
- Fig. 3a, b: einen Querschnitt der Schraube gemäß Fig. 1 an einem vorderen Bereich in alternativer Ausgestaltung,
- Fig. 4: eine perspektivische Ansicht zweier scheibenförmiger Werkzeuge und der Schraube während des Einarbeitens von Längsnuten und
- Fig. 5: eine Seitensicht der Schraube gemäß Fig. 1 und eines Zentrums des scheibenförmigen Werkzeuges.

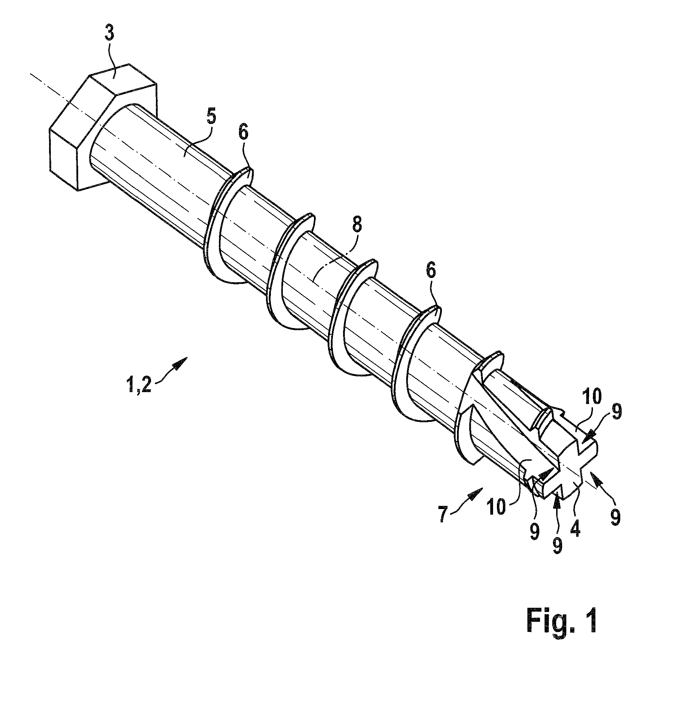

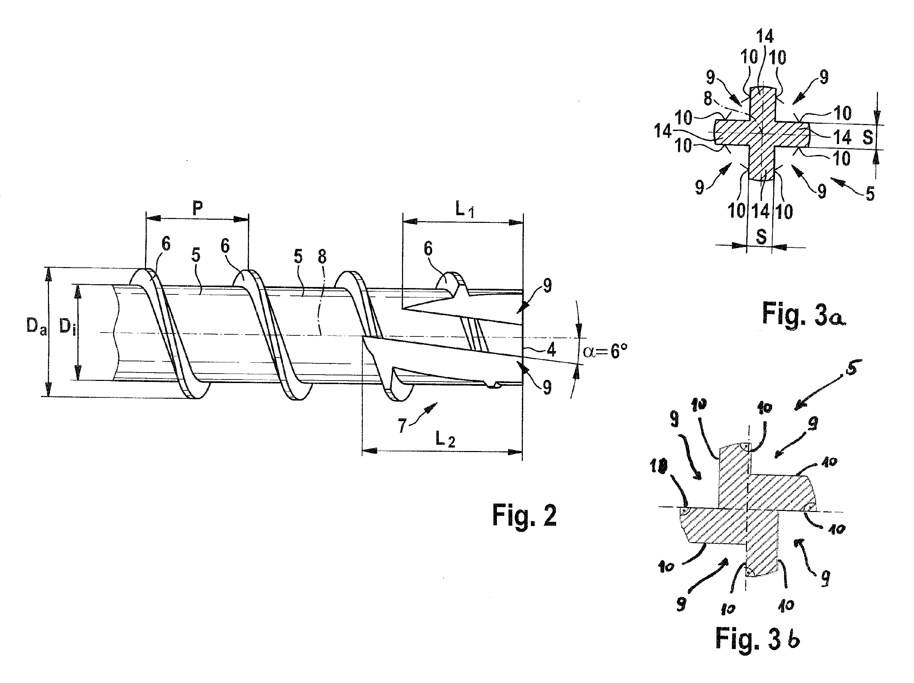

Eine gewindeschneidende Schraube 1 (Fig. 1) als Betonschraube 2 dient zum Einschrauben in ein Bohrloch in Beton (nicht dargestellt). Die Schraube 1 weist einen Schraubenkopf 3, ein Schraubenende 4 und ein Gewinde 6 an einem Schraubenschaft 5 auf. Dabei weist der Schraubenschaft 5 einen Abschnitt auf, der ohne Gewinde 6 ausgebildet ist; im Bereich des Schraubenkopfs 3 als Schraubenschaft 5 ohne Gewinde 6 und einen Abschnitt an dem Schraubenende 4 als Schraubenschaft 5 mit Gewinde 6. Die Schraube 1 weist einen Kerndurchmesser Dᵢ des Schraubenschaftes 5 sowie einen Außendurchmesser Dₐ am Gewinde 6 auf. Das Gewinde 6 weist ferner eine Steigung P auf, welche dem Abstand zwischen zwei Windungen des Gewindes 6 entspricht (Fig. 2).

Ein vorderer Bereich 7 der gewindeschneidenden Schraube 1 beginnt an dem Schraubenende 4 und verläuft dabei in Richtung einer Längsachse 8 der Schraube 1 in Richtung zu dem Schraubenkopf 3. Der vordere Bereich 7 umfasst dabei ungefähr zwei Windungen des Gewindes 6. In dem vorderen Bereich 7 der Schraube 1 sind vier Längsnuten 9 eingearbeitet (Fig. 1 bis 3 und 5). Die Längsnuten 9 weisen zwei unterschiedliche Längen L₁ und L₂ in Richtung der Längsachse 8 auf. Zwei bezüglich der Längsachse 8 ausgebildete Längsnuten 9 weisen eine kürzere Länge L₁ auf und zwei ebenfalls bezüglich der Längsachse 8 gegenüberliegende Längsnuten 9 weisen eine größere Länge L₂ (Fig. 2) auf. Die beiden Längsnuten 9 mit der Länge L₁ unterbrechen dabei lediglich nur eine erste Windung des Gewindes 6 und reichen nicht bis zu einer zweiten Windung des Gewindes 6. Die Längsnuten 9 mit der größeren Länge L₂ unterbrechen dabei sowohl eine erste als auch eine zweite Windung des Gewindes 6 ab dem Schraubenende 4 und die Längsnut 9 mit der größeren Länge L₂ endet dabei an der zweiten Windung des Gewindes 6 bzw. im Bereich der zweiten Windung des Gewindes 6, so dass von der Längsnut 9 mit der Länge L₂ zwei Windungen des Gewindes 6 unterbrochen sind (Fig. 1 und 2).

In einem Schnitt senkrecht zu der Längsachse 8 der Schraube 1 im Bereich des vorderen Bereiches 7 der Schraube 1 besteht der Schraubenschaft 5 aus im Wesentlichen senkrecht zueinander ausgerichteten Schenkeln 14 (Fig. 3 a,b). Zwischen diesen Schenkeln 14 mit der Dicke S sind somit die Längsnuten 9 vorhanden. Die Längsnuten 9 sind dabei jeweils von zwei Längsseiten 10 des Schraubenschaftes 5 bzw. der Schenkel 14 begrenzt. Die Längsnut 9 ist dabei im Wesentlichen L-förmig ausgebildet, weil die beiden Längsseiten 9 im Wesentlichen, d. h. mit einer Abweichung von weniger als 20° oder 10°, zueinander senkrecht ausgerichtet sind. Die Längsseiten 10 sind im vorliegenden Beispiel in einem Winkel α von 6° zu einer Geraden parallel zu der Längsachse 8 der Schraube 1 ausgerichtet (Fig. 2), möglich sind jedoch auch andere Winkel zwischen 1° und 20°. Beim Einschrauben der Schraube 1 in eine nicht dargestellte Bohrung in einem Baustoff entstehendes Gesteinsmehl kann damit leichter von einem vorderen Endbereich der Längsnut 9 an dem Schraubenende 4 in Richtung zu dem Schraubenkopf 3 in den Längsnuten 9 befördert werden, so dass dadurch weniger Gesteinsmehl oder kein Gesteinsmehl zwischen dem Schraubenschaft 5 und der Wandung der Bohrung vorhanden ist.

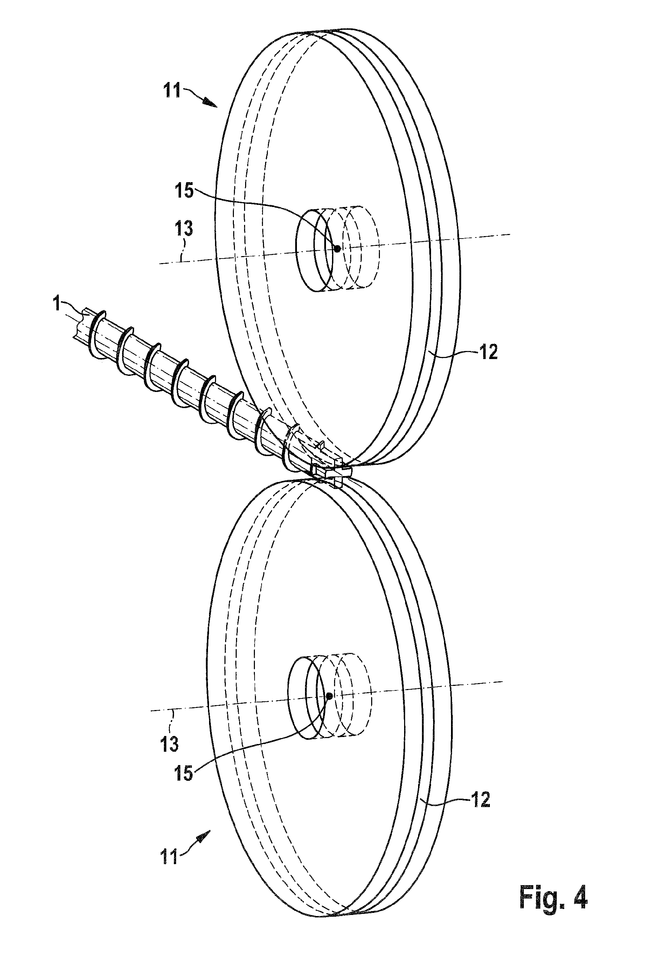

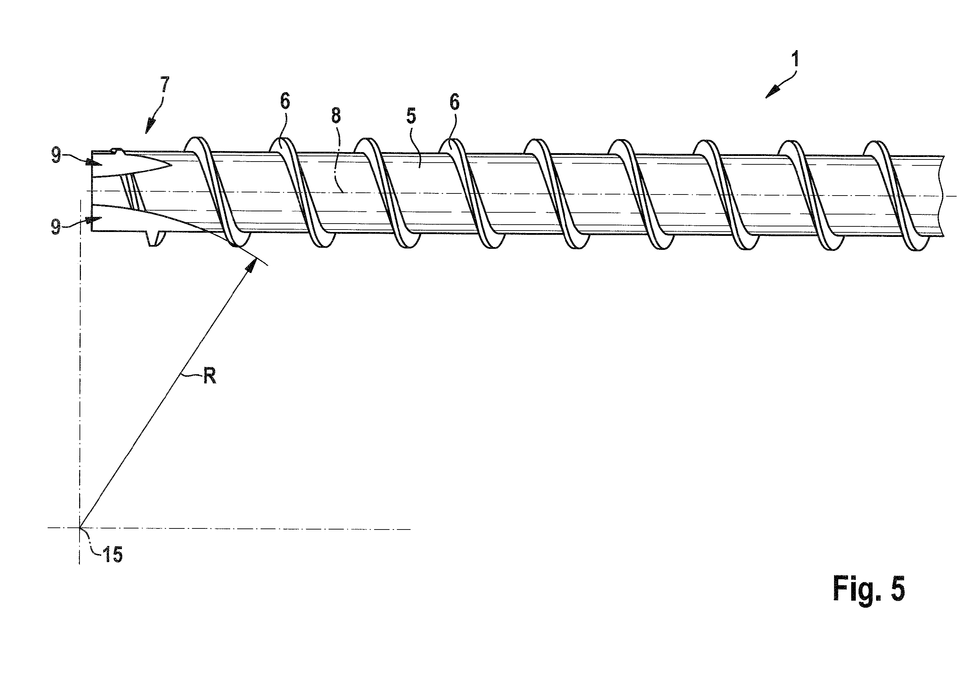

Die Schraube 1 weist vier äquidistant zu einem Umfang der Schraube 1 ausgerichteten Längsnuten 9 auf. Die Herstellung bzw. das Einarbeiten dieser Längsnuten 9 ist in den Fig.4 und 5 veranschaulicht. Zwei scheibenförmige Werkzeuge 11 weisen an ihrem radialen Ende einen Bearbeitungsring 12 auf. Die scheibenförmigen Werkzeuge 11 rotieren jeweils um eine Rotationsachse 13 und im Zentrum der scheibenförmigen Werkzeuge 11 an der Rotationsachse 13 bildet sich somit ein Zentrum 15 des Werkzeuges 11. Bei der Herstellung der gewindeschneidenden Schraube 1 wird zunächst die gewindeschneidende Schraube 1 ohne die Längsnuten 9 zur Verfügung gestellt. Die beiden scheibenförmigen Werkzeuge 11 sind dabei übereinander angeordnet, so dass die beiden Bearbeitungsringe 12 jeweils einen Abstand zueinander aufweisen, und die beiden Rotationsachsen 13 der Werkzeuge 11 sind zueinander parallel ausgerichtet. Die Schraube 1 wird zwischen den beiden Bearbeitungsringen 12 platziert, so dass durch eine Relativbewegung zwischen Schraube 1 und den Bearbeitungsringen 12 jeweils zwei gegenüberliegende Paare an Längsnuten 9 eingearbeitet werden. Der Winkel zwischen der Längsachse der Schraube 1 und der Ebenen der Werkzeuge 11 entspricht dem Winkel α der eingebrachten Längsnuten 9. Werden die Schrauben 1 in einer größeren Länge in den Raum zwischen den beiden Bearbeitungsringen 12 eingeführt, entsteht eine Längsnut 9 mit einer größeren Länge L₂ und bei einer geringeren Länge des Einführens in den Raum zwischen den Bearbeitungsringen 12 entstehen die Längsnuten 9 mit einer kleineren Länge L₁. Die Tiefe der Längsnuten 9 nimmt dabei beginnend von dem Schraubenende 4 in Richtung zum Schraubenkopf 3 ab, weil aufgrund des Radius R des im Querschnitt kreisförmigen Schraubenwerkzeuges 11 die Tiefe entsprechend abnehmend eingearbeitet wird (Fig. 5). Ein Zentrum 15 des Werkzeuges 11 ist dabei in einem Schnitt mit einer Schnittebene durch die Längsachse 8 in einem Abstand zu einer Ebene ausgerichtet, wobei die Ebene auf dem Schraubenende 4 aufliegt und die Ebene ferner senkrecht auf der Längsachse 8 senkrecht steht (Fig. 5).

Im dargestellten Beispiel weisen die Werkzeuge 11 den selben Radius auf; möglich ist jedoch auch die Herstellung der Längsnuten 9 mit Werkzeugen 11 mit verschiedenen Radien, insbesondere mit zwei identischen Paaren, bei denen die Werkzeuge 11 mit dem gleichen Radius über Kreuz angeordnet sind.

In Fig. 3 b ist ein Schnitt senkrecht zur Längsachse 8 der Schraube 1 im vorderen Bereich dargestellt, bei der die Schraube 1 mit einem derartigen ungleichmäßigen Satz von Werkzeugen 11 hergestellt wurde.

Bei beiden in den Fig. 3a und 3b dargestellten Alternativen wurden Werkzeuge 11 eingesetzt, bei denen die Mantelfläche senkrecht zu den Seitenflächen der Werkzeuge 11 angeordnet sind. Möglich ist hier alternativ jedoch auch, dass Werkzeuge 11 eingesetzt werden, bei denen die Mantelfläche unter einem Winkel ungleich von 90° zu den Seitenflächen angeordnet ist. Hieraus ergeben sich Längsnuten 9, bei denen die Seitenflächen 10 im Gegensatz zu den in den Fig. 3a und 3b dargestellten Alternativen keinen rechten Winkel einschließen.

Insgesamt betrachtet sind mit der gewindeschneidenden Schraube 1 wesentliche Vorteile verbunden. Die gewindeschneidende Schraube 1 ist in der Herstellung einfach und preiswert, weil die Längsnuten 9 einfach mit wenigstens einem scheibenförmigen Werkzeug 11 in die Schraube 1 eingearbeitet werden können. Aufgrund der Ausrichtung der Längsseiten 10 der Längsnuten 9 bezüglich der Längsachse 8 der Schrauben 1 kann beim Einführen und Einschrauben der Schraube 1 in ein Bohrloch im Bereich des Schraubenendes 4 befindliches Gesteinsmehl leicht von den Längsnuten 9 aufgenommen und in Richtung zu dem Schraubenkopf 3 befördert werden.

## Patentansprüche

1. Gewindeschneidende Schraube (1), insbesondere Betonschraube (2), umfassend einen Schraubenkopf (3), einen Schraubenschaft (5) und ein wenigstens teilweise an dem Schraubenschaft (5) ausgebildetes Gewinde (6), wobei an einem vorderen Bereich (7) der Schraube (1) beginnend mit einem Schraubenende (4) an dem Schraubenschaft (5) vier Längsnuten (9) ausgebildet sind, welche jeweils von zwei im Wesentlichen radial bezüglich einer Längsachse (8) der Schraube (1) verlaufenden Längsseiten (10) an dem Schraubenschaft (5) begrenzt sind, wobei die Tiefe der vier Längsnuten (9) in Richtung von dem Schraubenende (4) zu dem Schraubenkopf (3) stetig abnimmt,
**dadurch gekennzeichnet, dass**
eine Längsseite (10) je Längsnut (9) in einem Winkel α zwischen 1° und 20° zu einer Geraden parallel zu der Längsachse (8) der Schraube (1) ausgerichtet ist,
dass die erste und die zweite Längsnut (9) eine Form aufweisen, die dadurch erhalten werden kann, dass ein erstes, um eine erste Rotationsachse (13) rotierendes scheibenförmiges Werkzeug (11) mit einem Bearbeitungsring (12) in die Schraube (1) eingearbeitet wird, und dass die dritte und die vierte Längsnut (9) eine Form aufweisen, die dadurch erhalten werden kann, dass ein zweites, um eine zweite Rotationsachse (13) rotierendes scheibenförmiges Werkzeug (11) mit einem Bearbeitungsring (12) in die Schraube (1) eingearbeitet wird, wobei die beiden Bearbeitungsringe (12) mit einem Abstand zueinander angeordnet werden und die Schraube (1) zwischen den beiden Bearbeitungsringen (12) so platziert wird, dass durch eine Relativbewegung zwischen Schraube (1) und den Bearbeitungsringen (12) jeweils zwei gegenüberliegende Paare an Längsnuten (9) eingearbeitet werden.

2. Schraube nach Anspruch 1,
**dadurch gekennzeichnet, dass**
der Winkel α zwischen 2° und 10°, insbesondere zwischen 3° und 8°, liegt.

3. Schraube nach Anspruch 1 oder 2,
**dadurch gekennzeichnet, dass**
die Längsnuten (9) in axialer Richtung eine unterschiedliche Ausdehnung aufweisen.

4. Schraube nach einem oder mehreren der vorhergehenden Ansprüche,
**dadurch gekennzeichnet, dass**
an wenigstens einer Längsnut (9) wenigstens ein Gewinde (6) unterbrochen ist.

5. Schraube nach einem oder mehreren der vorhergehenden Ansprüche,
**dadurch gekennzeichnet, dass**
wenigstens eine Längsnut (9) im Querschnitt L- oder V-förmig ausgebildet ist.

6. Schraube nach einem oder mehreren der vorhergehenden Ansprüche,
**dadurch gekennzeichnet, dass**
mindestens eine Längsseite (10) einen rechten Winkel mit dem Schraubenschaft (5) einschließt.

7. Schraube nach einem oder mehreren der vorhergehenden Ansprüche,
**dadurch gekennzeichnet, dass**
die Schraube (1) wenigstens teilweise aus Metall, z. B. Stahl, oder, vorzugsweise faserverstärktem Kunststoff, z. B. GFK, besteht.

## Claims

1. Thread-cutting screw (1), in particular a concrete screw (2), comprising a screw head (3), a screw shank (5), and a screw thread (6) formed on at least part of the shank (5), four longitudinal grooves (9) being formed on the shank (5) in a forward region (7) of the screw (1) starting at the tip (4) of the screw, each [of the said grooves (9)] being bounded on the shank (5) by two longitudinal sides (10) extending substantially radially with respect to a longitudinal axis (8) of the screw (1), the depth of the four longitudinal grooves (9) steadily decreasing in the direction from the tip (4) of the screw towards the head (3),
**characterized in that**
one longitudinal side (10) of each longitudinal groove (9) is orientated at an angle α of between 1° and 20° to a straight line parallel with the longitudinal axis (8) of the screw (1),
**in that** the first and second longitudinal grooves (9) have a form obtainable by being recessed into the screw (1) with a disc-shaped tool (11) with a machining ring (12) rotating about a first rotational axis (13), and **in that** the third and fourth longitudinal grooves (9) have a form obtainable by being recessed into the screw (1) with a disc-shaped tool (11) with a machining ring (12) rotating about a second rotational axis (13), the two machining rings (12) being arranged with a gap between them and the screw (1) being placed between the two machining rings (12) so that two opposite pairs of longitudinal grooves (9) are machined through relative motion between screw (1) and machining rings (12).

2. Screw according to Claim 1,
**characterized in that**
the angle α lies between 2° and 10°, in particular between 3° and 8°.

3. Screw according to Claim 1 or Claim 2,
**characterized in that**
the longitudinal grooves (9) are of different extent in the axial direction.

4. Screw according to one or more of the preceding claims,
**characterized in that**
at least one screw thread (6) is interrupted at at least one longitudinal groove (9).

5. Screw according to one or more of the preceding claims,
**characterized in that**
at least one longitudinal groove (9) is formed with an L-shaped or V-shaped cross-section.

6. Screw according to one or more of the preceding claims,
**characterized in that**
at least one longitudinal side (10) includes a right angle with the shank (5).

7. Screw according to one or more of the preceding claims,
**characterized in that**
the screw (1) consists at least partly of metal, e.g. steel, or plastic material, preferably fibre-reinforced, e.g. GFRP.

## Revendications

1. Vis autotaraudeuse (1), en particulier une vis à béton (2), comportant une tête de vis (3), une tige de vis (5) et un filetage (6) formé au moins partiellement sur la tige de vis (5), dans laquelle quatre rainures longitudinales (9) débutant à une extrémité de vis (4) sont formées sur une zone avant (7) de la vis (1) sur la tige de vis (5), lesquelles rainures longitudinales sont respectivement délimitées par deux côtés longitudinaux (10) s'étendant de manière sensiblement radiale par rapport à un axe longitudinal (8) de la vis (1) sur la tige de vis (5), dans laquelle la profondeur des quatre rainures longitudinales (9) diminue de manière constante dans la direction depuis l'extrémité de vis (4) jusqu'à la tête de vis (3),
**caractérisée en ce que**
un côté longitudinal (10) de chaque rainure longitudinale (9) est orienté à un angle α compris entre 1° et 20° par rapport à une droite parallèle à l'axe longitudinal (8) de la vis (1),
**en ce que** les première et deuxième rainures (9) ont une forme qui peut être obtenue en pratiquant une entaille dans la vis (1) à l'aide d'un premier outil en forme de disque (11) pouvant tourner autour d'un premier axe de rotation (13) avec une couronne d'usinage (12), et **en ce que** les troisième et quatrième rainures longitudinales (9) ont une forme qui peut être obtenue en pratiquant une entaille dans la vis (1) à l'aide d'un second outil en forme de disque (11) pouvant tourner autour d'un second axe de rotation (13) avec une couronne d'usinage (12), dans laquelle les deux couronnes d'usinage (12) sont agencées à une certaine distance l'une de l'autre et la vis (1) est placée entre les deux couronnes d'usinage (12) de telle sorte que par un mouvement relatif entre la vis (1) et les couronnes d'usinage (12), deux paires opposées de rainures longitudinales (9) sont respectivement usinées.

2. Vis selon la revendication 1, **caractérisée en ce que** l'angle α est compris entre 2° et 10°, en particulier entre 3° et 8°.

3. Vis selon la revendication 1 ou 2, **caractérisée en ce que** les rainures longitudinales (9) ont une extension différente dans la direction axiale.

4. Vis selon une ou plusieurs des revendications précédentes, **caractérisée en ce qu'**au moins un filetage (6) est interrompu sur au moins une rainure longitudinale (9).

5. Vis selon une ou plusieurs des revendications précédentes, **caractérisée en ce qu'**au moins une rainure longitudinale (9) est en forme de L ou de V en coupe transversale.

6. Vis selon une ou plusieurs des revendications précédentes, **caractérisée en ce qu'**au moins un côté longitudinal (10) entoure un angle droit avec la tige de vis (5).

7. Vis selon une ou plusieurs des revendications précédentes, **caractérisée en ce que** la vis (1) est constituée au moins en partie de métal, par exemple un acier, ou est de préférence constituée d'une matière plastique renforcée par des fibres, par exemple GFK.
